(19) Europäisches Patentamt
European Patent Office
Office européen des brevets

(11) Publication number: **0 179 227**
**B1**

(12) **EUROPEAN PATENT SPECIFICATION**

(45) Date of publication of patent specification: **07.11.90**

(51) Int. Cl.$^5$: **C 08 G 18/40**, C 08 G 18/24

(21) Application number: **85110611.2**

(22) Date of filing: **23.08.85**

# (54) Modified polyhydroxy compounds, methods of manufacturing them, their use and polyurethane systems comprising said compounds.

(30) Priority: **24.08.84 JP 176194/84**

(43) Date of publication of application:
**30.04.86 Bulletin 86/18**

(45) Publication of the grant of the patent:
**07.11.90 Bulletin 90/45**

(84) Designated Contracting States:
**AT BE DE FR GB IT**

(56) References cited:
**US-A-3 706 714**
**US-A-4 251 636**

(73) Proprietor: **HUMAN INDUSTRY CORPORATION**
**1-1, 2-chome, Nihonbashi**
**Muromachi Chuo-ku Tokyo (JP)**

(72) Inventor: **Kumasaka, Sadao**
**22-11, Nakamachi**
**Kodaira-shi Tokyo (JP)**
Inventor: **Tada, Satomi**
**2-21-16, Koyama**
**Nerima-ku Tokyo (JP)**
Inventor: **Wakabayashi, Hirokazu**
**2-1-4, Matoba**
**Kawagoe-shi Saitama-ken (JP)**

(74) Representative: **Sajda, Wolf E., Dipl.-Phys. et al**
**MEISSNER, BOLTE & PARTNER**
**Widenmayerstrasse 48 Postfach 86 06 24**
**D-8000 München 86 (DE)**

**EP 0 179 227 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to modified polyhydroxy compounds, methods of manufacturing modified polyhydroxy compounds, use of such modified polyhydroxy compounds and polyurethane systems comprising said modified polyhydroxy compounds.

The present invention is concerned with the problem of improving the properties of polyhydroxy compounds (e.g., a polyether polyol or polyester polyol) which can serve as a raw material used in the manufacture of urethane foams.

Urethane foams are manufactured from an organic isocyanate compound, a polyhydroxy compound and water. An isocyanate component and a polyol component undergo a polymerization reaction to grow a urethane linkage. At the same time, the isocyanate component reacts with water in accordance with the reaction formula indicated below to generate carbon dioxide gas. The carbon dioxide gas forms a cell structure to provide a urethane foam.

$$\text{①} \quad \sim OH + \sim NCO \rightarrow \sim NH\overset{O}{\overset{\|}{C}}O\sim$$

$$\text{②} \quad H\sim OH + (\sim NCO)_2 \rightarrow \sim NH\overset{O}{\overset{\|}{C}}NH\sim + CO_2$$

$$\text{③} \quad \sim NH_2 + \sim NCO \rightarrow NHCONH\sim$$

Conventionally, a polyether polyol or polyester polyol is widely used as a polyhydroxy compound for a raw material for manufacturing a urethane foam. In this case, reactivity in cell formation and specific gravity and hardness of the resultant urethane foam differ depending upon the polyol compound used. In general, primary polyol compounds (i.e., a starting material is addition-polymerized with propylene oxide and subsequently with ethylene oxide to produce a polyol) have higher reactivity than secondary polyol compounds (i.e., a starting material is addition-polymerized with propylene oxide without employing ethylene oxide to produce a polyol) and can produce urethane foams having smaller specific gravity and higher hardness. For these reasons, primary polyol compounds with higher reactivity are used for foaming in a mold, and secondary polyol compounds are used for manufacturing foam slabs by free foaming.

Thus, the properties of a polyhydroxy compound have a significant influence in foamability and product quality in the manufacture of urethane foams.

From US—A—4 251 636 stannous halide complexes with hydroxyl compounds such as polyether polyols and their use as catalysts in preparing polyurethane foams are known. For example, stannous chloride is reacted with triethylene glycol, or a stannous chloride glycol complex is formed from stannous chloride and polyether triol. However, nothing can be found in this document as to the use of other tin compounds like tin oxide or tin hydroxide or even elementary tin as a modifying agent in order to obtain modified polyhydroxy compounds providing products with improved properties.

The present invention has been made in consideration of these circumstances and has for its objects to provide modified polyhydroxy compounds, methods of manufacturing modified polyhydroxy compounds, the use of modified polyhydroxy compounds and polyurethane systems comprising modified polyhydroxy compounds so as to allow the manufacture of urethane, especially urethane foam having a small specific gravity and a high hardness.

According to the invention, modified polyhydroxy compounds are provided which are obtainable by heating a polyhydroxy compound for 30 minutes or more at a temperature within a range of 150°C to 250°C under stirring and in the presence of a modifying agent comprising at least one member selected from the group consisting of tin hydroxide, tin oxide and tin.

According to a further feature of the invention such modified polyhydroxy compounds are obtainable with use of a polyether polyol and/or a polyester polyol.

According to one embodiment of the invention the modified polyhydroxy compounds are obtainable with use of a tin ingot as a modifying agent which is added in an amount of 1,0 part by weight or more per 100 parts by weight of the polyhydroxy compound.

According to another embodiment of the invention the modified polyhydroxy compounds are obtainable with use of tin hydroxide or tin oxide as a modifying agent which is added in an amount of 0,3 part by weight or more per 100 parts by weight of the polyhydroxy compound.

Advantageously, the modified polyhydroxy compounds according to the invention are suitable in use as raw materials for manufacturing urethane, especially urethane foam having a small specific gravity and a high hardness.

According to the present invention polyurethane systems are provided comprising as main components a polyol and a polyisocyanate, wherein the polyol component is a modified polyhydroxy compound according to the invention.

Further, according to the present invention, there is provided a method of manufacturing modified polyhydroxy compounds characterized in that a polyhydroxy compound is heated for 30 minutes or more at a temperature within a range of 150°C to 250°C under stirring and in the presence of a modifying agent comprising at least one member selected from the group consisting of tin hydroxide, tin oxide and tin.

Polyhydroxy compounds to be modified by the present invention are polyol compounds conventionally used in the manufacture of urethane foams and typically polyether polyols or polyester polyols. Polyether polyols are obtained by addition polymerization of epoxy compounds such as ethylene oxide or propylene oxide to a polyvalent alcohol. Examples of the polyalcohol as a starting material may include ethylene glycol, diethylene glycol, propylene glycol, butylene glycol, and hexylene glycol (functionality 2); glycerine, trimethylolpropane, trimethylolethane and 1,2,6-hexanetriol (functionality 3); pentaerythritol (functionality 4); and sorbitol or sucrose. Polyol compounds to be modified may be primary or secondary polyols.

Tin to be used in the present invention may be in the form of an ingot, granular or a powder. As for tin hydroxide and tin oxide, although their forms are not particularly specified, they are generally used in a powder or granular form. A selected modifying agent is preferably added in the amount of one part by weight or more in the case of tin ingot, and 0,3 part by weight or more in the case of tin hydroxide or tin oxide, per 100 parts by weight of the polyol.

In order to practice the method of the present invention, a polyhydroxy compound is heated and stirred in the presence of metal tin or tin hydroxide or tin oxide. The heating temperature and time differ in accordance with the types of the polyhydroxy compound and tin hydroxide or tin oxide used and the physical form of tin, tin hydroxide or tin oxide. However, generally, the heating temperature is 150 to 250°C, more preferably 190 to 220°C and the heating time is 30 minutes to 3 hours. The modification effect is not improved even if heating is performed for a longer period of time.

When a urethane foam is manufactured using a polyhydroxy compound treated by the modifying method according to the present invention, a urethane foam having a smaller specific gravity and a higher hardness than in the case of a non-modified polyhydroxy compound is obtained. In addition, reactivity is improved, and better foamability is obtained. For these reasons, secondary polyol compounds which could not be conventionally used for foaming in a mold can be used as part of the raw material for foaming in a mold after being modified by the method of the present invention. In slab foaming, conventional low-density foams can have small specific gravity of up to only 0,013 g/cm$^3$. However, when polyols modified by the method of the present invention are used, ultra low-density foams having specific gravities of 0,008 to 0,012 g/cm$^3$ can be manufactured.

The mechanism of the modification effect obtained by the method of the present invention is not yet clarified. However, it is postulated that metal tin, tin hydroxide or tin oxide serves as a catalyst and the polyhydroxy compound undergoes a chemical change on the surface of the catalyst.

A modified polyol obtained herein can be used singly or in an admixture of 2 or more depending upon the physical properties and the like of the objective product. Furthermore, a modified polyol according to the present invention can be blended with a non-modified polyol in a predetermined ratio.

## Example

1 000 g of a polyether polyol having a molecular weight of 3000, solely made from propylene oxide, an OH value of 56, and a functionality of 3 were measured in a stainless steel container. Granules of tin ingot or a tin compound as in Table 1 below were charged in the container, and the mixture was heated under stirring at 150 to 250°C for 2 hours. After the reaction, the mixture was cooled to provide a modified polyol.

Table 1

| Modified Polyol Sample | Tin | | Tin Hydroxide | Tin Oxide |
|---|---|---|---|---|
| | | | | |
| No. 1 | 250 g | | $Sn(OH)_2$: 10 g | |
| No. 2 | 250 g | | | SnO: 30 g |
| No. 3 | 500 g | | | |

## Foam Manufacture Test Example

The modified polyols obtained in the above Example (Sample Nos. 1 to 3) were used to manufacture

soft polyurethane foams by the one-shot method. Each composition was adjusted to obtain a foam having a density of 0,010 or 0,016 g/cm³. The physical properties of the obtained polyurethanes were examined.

As Control Tests, soft polyurethane foams were similarly manufactured using the same polyether polyols (having a molecular weight of 3 000, solely made from propylene oxide, an OH value of 56, and a functionality of 3) as above which were not however modified (Control Tests A and B).

The results obtained in the Tests and Control Tests are summarized in Table 2.

Table 2

| | | Test 1 | Test 2 | Test 3 | Control Test A | Control Test B |
|---|---|---|---|---|---|---|
| Composition | Modified polyol | 100 (sample No. 1) | 100 (sample No. 2) | 100 (sample No. 3) | - | - |
| | Non-modified polyol | | | | 100 | 100 |
| | Triethylenediamine | 0,45 | 0,45 | 0,45 | 0,45 | 0,38 |
| | n-Ethylmorpholine | 0,67 | 0,67 | 0,67 | 0,67 | 0,60 |
| | Stannous octoate | 0,40 | 0,40 | 0,40 | 0,40 | 0,38 |
| | Water | 7,0 | 7,0 | 7,0 | 6,5 | 5,3 |
| | Silicone oil | 1,6 | 1,6 | 1,6 | 1,6 | 1,5 |
| | Trichlorofluoromethane | 8,0 | 8,0 | 8,0 | 8,0 | 8,0 |
| | Methylene chloride | 8,0 | 8,0 | 8,0 | 8,0 | 4,0 |
| | Toluylenediisocyanate | 78,0 | 78,0 | 78,0 | 78,0 | 68,0 |

Table 3

| | | Test 1 | Test 2 | Test 3 | Control Test A | Control Test B |
|---|---|---|---|---|---|---|
| Physical Properties | Density ($g/cm^3$) | 0,010 | 0,010 | 0,0105 | 0,013 | 0,016 |
| | Hardness (kg/JIS) | 7,5 | 7,8 | 7,1 | 6,0 | 8,3 |
| | Tensile strength ($kg/cm^2$) | 0,65 | 0,65 | 0,66 | 0,65 | 0,83 |
| | Elongation (%) | 145 | 140 | 150 | 155 | 170 |
| | Tear strength | 0,40 | 0,40 | 0,42 | 0,35 | 0,45 |

As can be seen from the above results, products having both a low-density and a high hardness can be obtained according to the present invention. In addition, the soft polyurethane foams have better physical properties such as hardness than those of conventional foams even if they have a lower density.

As described above, according to the present invention, a polyhydroxy compound as a raw material for the manufacture of a polyurethane foam is modified so that a polyurethane foam having a small specific gravity and at the same time a high hardness can be manufactured.

**Claims**

1. Modified polyhydroxy compounds obtainable by heating a polyhydroxy compound for 30 minutes or more at a temperature within a range of 150°C to 250°C under stirring and in the presence of a modifying agent comprising at least one member selected from tin hydroxide, tin oxide and tin.

2. Modified polyhydroxy compounds according to claim 1, obtainable with use of a polyether polyol and/or a polyester polyol.

3. Modified polyhydroxy compounds according to claim 1 or 2, obtainable with use of a tin ingot as a modifying agent which is added in an amount of 1,0 part by weight or more per 100 parts by weight of the polyhydroxy compound.

4. Modified polyhydroxy compounds according to claim 1 or 2, obtainable with use of tin hydroxide or tin oxide as a modifying agent which is added in an amount of 0,3 part by weight or more per 100 parts by weight of the polyhydroxy compound.

5. A method of manufacturing modified polyhydroxy compounds characterized in that a polyhydroxy compound is heated for 30 minutes or more at a temperature within a range of 150°C to 250°C under stirring and in the presence of a modifying agent comprising at least one member selected from tin hydroxide, tin oxide and tin.

6. The method according to claim 5, characterized in that the polyhydroxy compound is selected from a polyether polyol and a polyester polyol.

7. The method according to claim 5 or 6, characterized in that the modifying agent is tin ingot which is added in an amount of 1,0 part by weight or more per 100 parts by weight of the polyhydroxy compound.

8. The method according to claim 5 or 6, characterized in that the modifying agent is tin hydroxide or tin oxide, which is added in an amount of 0,3 part by weight or more per 100 parts by weight of the polyhydroxy compound.

9. Use of the modified polyhydroxy compounds according to any of claims 1 to 4 as raw materials for manufacturing urethane, especially urethane foams.

10. Polyurethane systems, comprising as main components a polyol and a polyisocyanate, characterized in that the polyol component is a modified polyhydroxy compound according to any of claims 1 to 4.

**Patentansprüche**

1. Modifizierte Polyhydroxyverbindungen, erhältlich durch Erhitzen einer Polyhydroxyverbindung für 30 Minuten oder länger bei einer Temperatur innerhalb eines Bereiches von 150°C bis 250°C unter Rühren und in Gegenwart eines Modifizierungsmittels, das aus mindestens einer aus Zinnhydroxid, Zinnoxid und Zinn ausgewählten Substanz besteht.

2. Modifizierte Polyhydroxyverbindungen nach Anspruch 1, erhältlich durch Verwendung eines Polyetherpolyols und/oder eines Polyesterpolyols.

3. Modifizierte Polyhydroxyverbindungen nach Anspruch 1 oder 2, erhältlich durch Verwendung von Blockzinn als Modifizierungsmittel, das in einer Menge von 1,0 oder mehr Gewichtsteilen pro 100 Gewichtsteile der Polyhydroxyverbindung zugegeben wird.

4. Modifizierte Polyhydroxyverbindungen nach Anspruch 1 oder 2, erhältlich durch Verwendung von Zinnhydroxid oder Zinnoxid als Modifizierungsmittel, das in einer Menge von 0,3 oder mehr Gewichtsteilen pro 100 Gewichtsteile der Polyhydroxyverbindung zugegeben wird.

5. Verfahren zur Herstellung von modifizierten Polyhydroxyverbindungen, dadurch gekennzeichnet, daß eine Polyhydroxyverbindung 30 Minuten oder länger bei einer Temperatur innerhalb eines Bereiches von 150°C bis 250°C unter Rühren und in Gegenwart eines Modifizierungsmittels erhitzt wird, das aus mindestens einer aus Zinnhydroxid, Zinnoxid oder Zinn ausgewählten Substanz besteht.

6. Verfahren nach Anspruch 5, dadurch gekennzeichnet, daß die Polyhydroxyverbindung aus einem Polyetherpolyol und einem Polyesterpolyol ausgewählt wird.

7. Verfahren nach Anspruch 5 oder 6, dadurch gekennzeichnet, daß das Modifizierungsmittel Blockzinn ist, das in einer Menge von 1,0 oder mehr Gewichtsteilen pro 100 Gewichtsteile der Polyhydroxyverbindung zugegeben wird.

8. Verfahren nach Anspruch 5 oder 6, dadurch gekennzeichnet, daß das Modifizierungsmittel Zinnhydroxid oder Zinnoxid ist, das in einer Menge von 0,3 oder mehr Gewichtsteilen pro 100 Gewichtsteile der Polyhydroxyverbindung zugegeben wird.

9 Verwendung der modifizierten Polyhydroxyverbindungen nach einem der Ansprüche 1 bis 4 als Ausgangsstoffe für die Herstellung von Urethan, insbesondere Urethanschäumen.

10. Polyurethansysteme, enthaltend als Hauptbestandteile ein Polyol und ein Polyisocyanat, dadurch gekennzeichnet, daß der Polyolbestandteil eine gemäß einem der Ansprüche 1 bis 4 modifizierte Polyhydroxyverbindung ist.

**Revendications**

1. Composés polyhydroxylés modifiés, que l'on peut obtenir en chauffant un composé polyhydroxylé pendant 30 minutes ou plus, à une température située dans l'intervalle de 150°C à 250°C, sous agitation et en présence d'un agent de modification comprenant au moins un corps choisi parmi un hydroxyde d'étain, un oxyde d'étain et l'étain.

2. Composés polyhydroxylés modifiés conformes à la revendication 1, que l'on peut obtenir en utilisant un polyéther-polyol et/ou un polyester-polyol.

3. Composés polyhydroxylés modifiés conformes à la revendication 1 ou 2, que l'on peut obtenir en utilisant un lingot d'étain comme agent de modification, lequel est ajouté à raison de 1,0 partie en poids ou plus pour 100 parties en poids du composé polyhydroxylé.

4. Composés polyhydroxylés modifiés conformes à la revendication 1 ou 2, que l'on peut obtenir en utilisant un hydroxyde d'étain ou un oxyde d'étain comme agent de modification, lequel est ajouté à raison de 0,3 partie en poids ou plus pour 100 parties en poids du composé polyhydroxylé.

5. Procédé de préparation de composés polyhydroxylés modifiés, caractérisé en ce que l'on chauffe un composé polyhydroxylé pendant 30 minutes ou plus à une température située dans l'intervalle de 150°C à 250°C, sous agitation et en présence d'un agent de modification comprenant au moins un corps choisi parmi un hydroxyde d'étain, un oxyde d'étain et l'étain.

6. Procédé conforme à la revendication 5, caractérisé en ce que le composé polyhydroxylé est choisi parmi un polyéther-polyol et un polyester-polyol.

7. Procédé conforme à la revendication 5 ou 6, caractérisé en ce que l'agent de modification est un lingot d'étain qui est ajouté à raison de 1,0 partie en poids ou plus pour 100 parties en poids du composé polyhydroxylé.

8. Procédé conforme à la revendication 5 ou 6, caractérisé en ce que l'agent de modification est un hydroxyde d'étain ou un oxyde d'étain, qui est ajouté à raison de 0,3 partie en poids ou plus pour 100 parties en poids du composé polyhydroxylé.

9. Utilisation des composés polyhydroxylés modifiés conformes à l'une quelconque des revendications 1 à 4, à l'état de produits bruts pour la fabrication d'uréthane, et en particulier de mousses d'uréthane.

10. Système pour polyuréthane, comprenant comme composants principaux un polyol et un polyisocyanate, caractérisé en ce que le composant polyol est un composé polyhydroxylé modifié conforme à l'une quelconque des revendications 1 à 4.